**Europäisches Patentamt**

**European Patent Office**

**Office européen des brevets**

(19)

(11) Veröffentlichungsnummer : **0 229 834**
**B1**

(12) **EUROPÄISCHE PATENTSCHRIFT**

(45) Veröffentlichungstag der Patentschrift :
26.04.89

(21) Anmeldenummer : 86904800.9

(22) Anmeldetag : 16.07.86

(86) Internationale Anmeldenummer :
PCT/EP 86/00417

(87) Internationale Veröffentlichungsnummer :
WO/8700479 (29.01.87 Gazette 87/03)

(51) Int. Cl.⁴ : **B 27 C  1/12**, B 23 Q  3/00

(54) ANSCHLAGVORRICHTUNG FÜR HOLZBEARBEITUNGSMASCHINEN, INSBESONDERE ABRICHTHOBELMASCHINEN.

(30) Priorität : 16.07.85 DE 3525296

(43) Veröffentlichungstag der Anmeldung :
29.07.87 Patentblatt 87/31

(45) Bekanntmachung des Hinweises auf die Patenterteilung : 26.04.89 Patentblatt 89/17

(84) Benannte Vertragsstaaten :
AT BE CH DE FR GB IT LI LU NL SE

(56) Entgegenhaltungen :
DE–U– 8 135 734
FR–A–   644 297
US–A– 2 183 190
US–A– 2 719 548
US–A– 3 289 714

(73) Patentinhaber : AIGNER, Georg
Thannenmais
D-8386 Reisbach (DE)

(72) Erfinder : AIGNER, Georg
Thannenmais
D-8386 Reisbach (DE)

(74) Vertreter : Gustorf, Gerhard, Dipl.-Ing.
Patentanwalt Dipl.-Ing. Gerhard Gustorf Bachstrasse
6 A
D-8300 Landshut (DE)

**Beschreibung**

Die Erfindung betrifft eine Anschlagvorrichtung für Holzbearbeitungsmaschinen, insbesondere Abrichthobelmaschinen, mit einer auf dem Maschinentisch stehenden Anschlagplatte und einer an dieser schwenkbar gelagerten Hilfsanschlagleiste, die aus einer auf dem Maschinentisch aufliegenden Betriebsstellung in eine Bereitschaftsstellung schwenkbar ist.

Eine derartige Anschlagvorrichtung ist in dem deutschen Gebrauchsmuster 81 35 734 beschrieben und dargestellt. Beim Bearbeiten schmaler Werkstücke ist dabei die Hilfsanschlagleiste in ihre Betriebsstellung geschwenkt, in der sie auf dem Maschinentisch aufliegt, wobei scheibenförmige Füßchen als Abstandshalter zwischen der Hilfsanschlagleiste und dem Maschinentisch dienen. In dieser Betriebsstellung der Hilfsanschlagleiste ist die Gefahr ausgeschaltet, daß die Hände der Bedienungsperson von dem Werkstück abrutschen können und am Hobelmesser verletzt werden. Wenn hingegen hohe Werkstücke bearbeitet werden sollen, beispielsweise zum Abrichten der Schmalseiten von Brettern, muß die Hilfsanschlagleiste in ihre Bereitschaftsstellung geschwenkt werden. In dieser Bereitschaftsstellung befindet sich die Hilfsanschlagleiste bei der bekannten Vorrichtung hinter der Anschlagplatte und über dieser.

Die bekannte Anschlagvorrichtung ist dann voll funktionstüchtig, wenn die Anschlagplatte eine vertikal stehende Position einnimmt. Wenn es jedoch erforderlich wird, die Anschlagplatte in eine Schräglage zu bringen, wozu diese mit ihrer Rückseite an einem entsprechenden Halte- und Verstellmechanismus befestigt ist, läßt es sich in den meisten Fällen nicht vermeiden, daß die Hilfsanschlagleiste gegen den nach oben abstehenden Halte- und Verstellmechanismus schlägt, wobei sie beschädigt werden kann; außerdem behindert sie in dieser Bereitschaftsstellung die Betätigung des Halte- und Verstellmechanismus. Nicht zuletzt kann in der genannten Schrägstellung die Hilfsanschlagleiste nicht weit genug zurückgeschwenkt werden, so daß sie in die Bewegungsbahn der Werkstücke ragt und die Bearbeitung hoher Werkstücke unmöglich macht.

Der Erfindung liegt die Aufgabe zugrunde, die Anschlagvorrichtung der eingangs angegebenen Gattung so weiterzubilden, daß die Hilfsanschlagleiste in ihrer Bereitschaftsstellung so angeordnet ist, daß sie in keiner Position der Anschlagplatte stört und die Bedienung von Hilfs- und Verstellmechanismen zum Schrägstellen der Anschlagplatte behindert.

Erfindungsgemäß wird diese Aufgabe bei der Anschlagvorrichtung der angegebenen Bauart dadurch gelöst, daß die Hilfsanschlagleiste in ihrer Bereitschaftsstellung in einer den Abmessungen der Hilfsanschlagleiste angepaßten Ausnehmung der Anschlagplatte versenkt ist.

Bei dieser Lösung bildet die Hilfsanschlagleiste in der Bereitschaftsstellung mit der Anschlagplatte eine Einheit und ist in dieser integriert untergebracht, so daß die Anschlagplatte problemlos an allen üblichen Halte- und Verstellmechanismen befestigt werden kann, ohne daß die Hilfsanschlagleiste in ihrer Bereitschaftsstellung ein Hindernis darstellt.

Bei einer bevorzugten Ausführungsform der Erfindung ist die Ausnehmung ein von der oberen Längskante in die Anschlagplatte eingearbeiteter Schlitz.

Diese Lösung hat den Vorteil, daß die Hilfsanschlagleiste in ihrer Bereitschaftsstellung sicher sitzend untergebracht ist, ohne daß hierzu die als Anschlagfläche dienende Vorderseite der Anschlagplatte beeinträchtigt wird.

In vorteilhafter Weiterbildung der Erfindung weist die Hilfsanschlagleiste an ihrer freien, die Anschlagkante bildenden Längsseite eine in der Betriebsstellung nach oben abstehende Griff- und Führungskante auf.

Diese Griff- und Führungskante erfüllt gleichzeitig zwei Aufgaben, denn erstens erleichtert sie die Handhabung beim Herausziehen der Hilfsanschlagleiste aus dem Schlitz in die Betriebsstellung, und zweitens bietet sie der Bedienungsperson eine Führung für die Hand, so daß diese beim Vorschieben des Werkstücks nicht abrutschen kann.

Nach einem anderen Merkmal der Erfindung ist jedes der beiden stirnseitigen Enden der Hilfsanschlagleiste über einen Schwenkarm gelenkig mit einem höhenverschieblichen Gleitstein verbunden, der in einer Längsführung an der zugehörigen Stirnseite der Anschlagplatte gelagert ist.

Dabei kann die Hilfsanschlagleiste drehbar mit einem Schenkel des i. w. L-förmigen Schwenkarms verbunden sein, dessen anderer Schenkel drehbar am Gleitstein befestigt ist.

Es ist vorteilhaft, wenn zwischen dem Gleitstein und dem Schwenkarm dessen Drehung zwischen der Betriebsstellung und der Bereitschaftsstellung auf etwa 180° begrenzende Anschlagmittel vorgesehen sind.

Auf diese Weise wird erreicht, daß beim Einschwenken der Hilfsanschlagleiste in die Bereitschaftsstellung diese nicht über den Schlitz und hinter die Anschlagplatte hinausgeschwenkt werden kann, so daß sie am Ende dieser Schwenkbewegung problemlos in den Schlitz abgesenkt werden kann, ohne daß die Bedienungsperson hierzu die genaue Lage der Hilfsanschlagleiste über dem Schlitz suchen muß.

Die Anschlagmittel können dabei so ausgebildet sein, daß sie einen von dem Gleitstein abstehenden Stift aufweisen, der in eine halbkreisförmige Führungsnut im Schwenkarm eingreift.

Bei der erfindungsgemäß ausgebildeten Anschlagvorrichtung hat die Hilfsanschlagleiste zwei definierte Positionen in der Betriebsstellung und in der Bereitschaftsstellung, so daß zusätzliche Hilfsmittel zum Festklemmen, Verschrauben oder dgl., die den Betrieb und die Handhabung der Anschlagvorrichtung erschweren würden, nicht erforderlich sind.

Weitere Merkmale und Vorteile der Erfindung ergeben sich aus den übrigen Unteransprüchen und aus der nachfolgenden Beschreibung von Ausführungsbeispielen, die in der Zeichnung dargestellt sind.

Es zeigen:

Figur 1 eine perspektivische Darstellung einer Anschlagvorrichtung gemäß der Erfindung mit einem Teil der Abrichthobelmaschine, auf der sie befestigt ist,

Figur 2 eine Stirnansicht der Anschlagvorrichtung mit der zugehörigen Hilfsanschlagleiste in der Bereitschaftsstellung,

Figur 3 die Anschlagvorrichtung in Schrägstellung,

Figur 4 die Ansicht des Gleitsteins,

Figur 5 die Draufsicht des Gleitsteins,

Figur 6 eine teilweise geschnittene Ansicht des Gleitsteins in seiner Längsführung,

Figur 7 eine perspektivische Ansicht des Schwenkarms,

Figur 8 eine vergrößerte Stirnansicht der Anschlagvorrichtung mit der Hilfsanschlagleiste in der Bereitschaftsstellung,

Figur 9 eine andere Ausführungsform der Erfindung

Figur 10 eine weitere Ausführungsform der Erfindung und

Figur 11 eine nochmalige Variante der Erfindung.

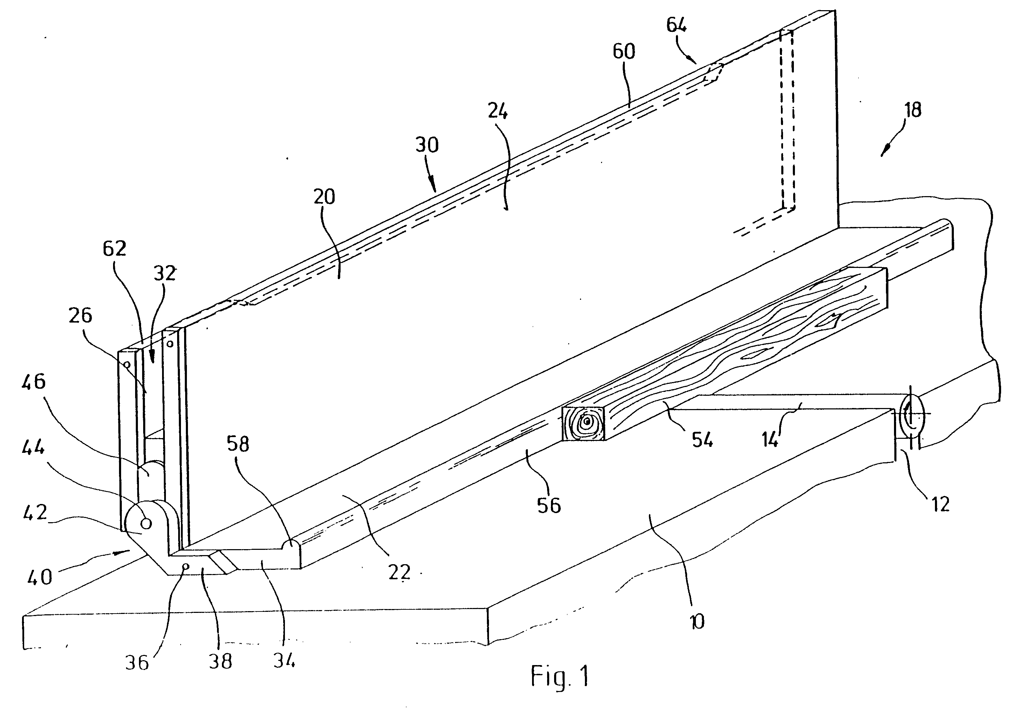

In den Figuren 1 bis 3 ist der Maschinentisch 10 einer Abrichthobelmaschine zu erkennen, der einen Schlitz 12 aufweist, durch den die Messerwelle 14 nach oben herausragt. Auf dem Maschinentisch 10 ist über einen Halte- und Verstellmechanismus 16 die erfindungsgemäß ausgebildete Anschlagvorrichtung 18 befestigt.

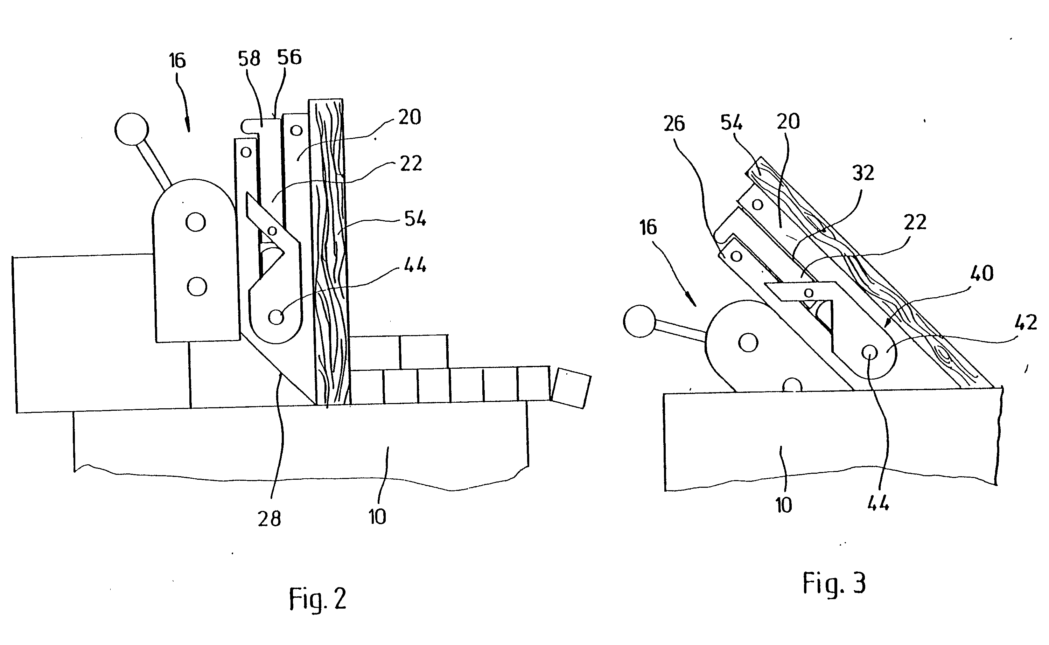

Die Anschlagvorrichtung 18 besteht im wesentlichen aus einer Anschlagplatte 20 und einer an dieser schwenkbar gelagerten Hilfsanschlagleiste 22. Die Anschlagplatte 20 weist eine ebene Anschlagfläche 24 auf und ist mit ihrer davon abgekehrten Rückwand 26 an dem Halte- und Verstellmechanismus 16 befestigt. Dieser erlaubt es, die Anschlagplatte 20, wie Figur 3 zeigt, in eine Schrägstellung zu schwenken. Hierzu verläuft die untere Längskante 28 der Anschlagplatte 20 ebenfalls schräg.

In die Anschlagplatte 20 ist von ihrer oberen Längskante 30 ausgehend ein Schlitz 32 eingearbeitet, der den Abmessungen der Hilfsanschlagleiste 22 angepaßt ist, so daß diese in ihrer in den Figuren 2 und 3 gezeigten Bereitschaftsstellung in diesen Schlitz 32 versenkt werden kann.

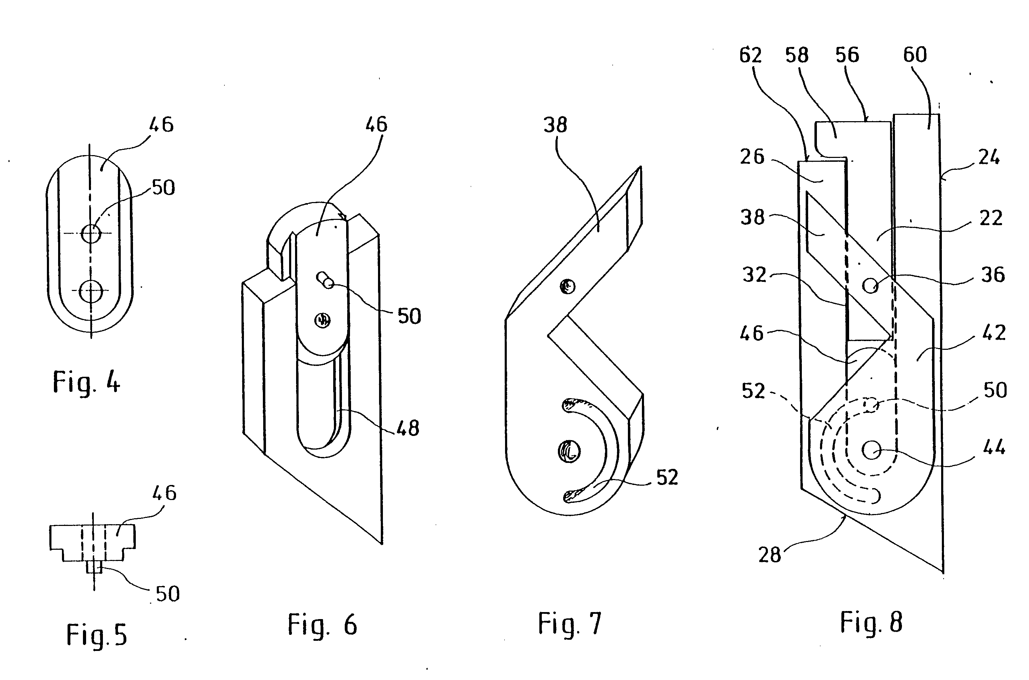

Jedes der beiden stirnseitigen Enden 34 der Hilfsanschlagleiste 22 ist über einen Bolzen 36 schwenkbar an einem Schenkel 38 eines i. w. L-förmigen Schwenkarmes 40 gelagert. Der andere Schenkel 42 des Schwenkarmes 40 ist ebenfalls über einen Bolzen 44 drehbar an einem Gleitstein 46 befestigt. Der in den Figuren 4 bis 6 gezeigte Gleitstein 46 ist seinerseits höhenverschieblich in einer Längsführung 48 gelagert, die an der zugehörigen Stirnseite der Anschlagplatte 20 vorgesehen ist.

Wie Figur 5 zeigt, hat der Gleitstein 46 einen stufenförmigen Querschnitt, der in die entsprechend stufenförmig ausgebildete Längsführung 48 gemäß Figur 6 eingreift und auf diese Weise sicher gehalten wird.

Von dem Gleitstein 46 steht rechtwinklig ein Stift 50 ab, der in eine halbkreisförmige Führungsnut 52 eingreift, welche in den Schenkel 42 des Schwenkarms 40 eingearbeitet ist. Auf diese Weise wird ein Anschlag gebildet, der die Drehung des Schwenkarmes 40 aus der in Figur 1 gezeigten Betriebsstellung der Hilfsanschlagleiste 22 in die in den Figuren 2 und 8 gezeigte Bereitschaftsstellung auf etwa 180° begrenzt. Dadurch kann der Schwenkarm 40 bei der erwähnten Drehung nicht über den Schlitz 32 und hinter die Anschlagplatte 20 gedreht werden, so daß ein sicheres Einfädeln der Hilfsanschlagleiste 22 von oben in den Schlitz 12 gewährleistet ist.

Wie Figur 1 zeigt, bilden die beiden Schenkel 38 und 42 des Schwenkarmes 40 einen rechten Winkel, so daß sie in der Betriebsstellung der Hilfsanschlagleiste 22 weder über diese noch über die Anschlagplatte 20 vorstehen und eine störungsfreie Führung des abzurichtenden Werkstücks 54 gewährleisten.

Die Hilfsanschlagleiste 22 hat an ihrer freien, die Anschlagkante 56 bildenden Längsseite eine Griff- und Führungskante 58, die in der Betriebsstellung der Hilfsanschlagleiste 22 nach oben absteht. Dadurch ist an der Hilfsanschlagleiste 22 eine zusätzliche Führung für die Hand der Bedienungsperson vorhanden, die die Sicherheit noch weiter erhöht. Außerdem erleichtert die Griff- und Führungskante 58 die Handhabung der Hilfsanschlagleiste 22 bei deren Schwenken aus der in Figur 1 gezeigten Betriebsstellung in die in den Figuren 2 und 3 gezeigte Bereitschaftsstellung und umgekehrt.

In Figur 1 ist angedeutet, daß die den Schlitz 32 in der Anschlagplatte 20 zu deren Anschlagfläche 24 hin begrenzende Vorderwand 60 höher als deren Rückwand 26 ist, in deren Oberkante 62 eine Griffaussparung 64 eingearbeitet ist. Die Griffaussparung 64 erleichtert es der Bedienungsperson, die Griff- und Führungskante 58 der Hilfsanschlagleiste 22 beim Herausziehen aus der Bereitschaftsstellung zu erfassen.

Zur besseren Veranschaulichung der Erfindung sind in den Figuren erforderliche Schutzvorrichtungen, z. B. Gliederschutz, Fügeleisten und dgl., nicht dargestellt.

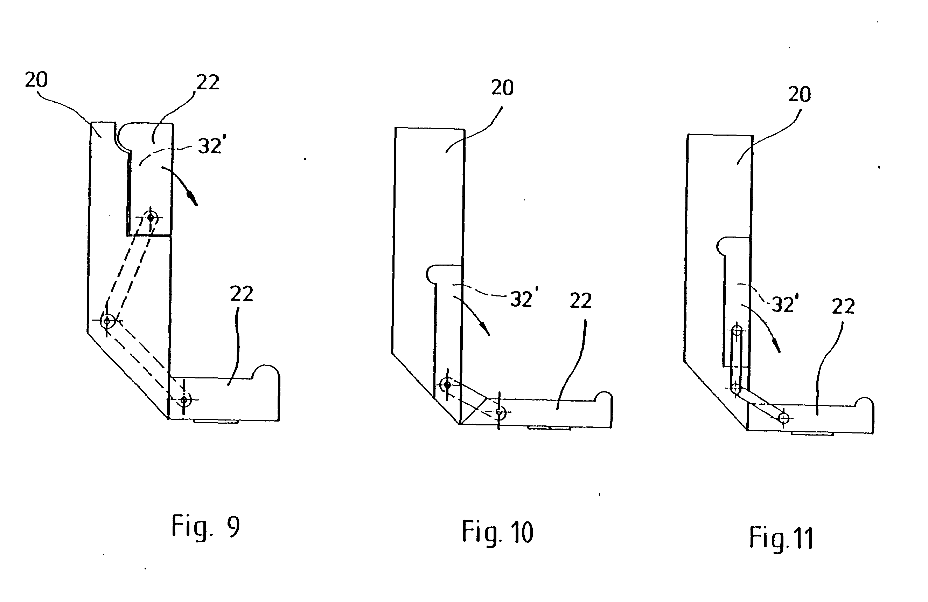

Die Figuren 9 bis 11 zeigen schematisch drei Varianten der Erfindung, bei denen die Hilfsanschlagleiste 22 in ihrer Bereitschaftsstellung in jeweils eine Aussparung 32 eingeschwenkt und versenkt ist, die von der Oberkante her (Figur 9), von der Unterkante her (Figur 10) bzw. in den mittleren Bereich (Figur 11) der Anschlagplatte 20 eingearbeitet ist.

## Patentansprüche

1. Anschlagvorrichtung für Holzbearbeitungsmaschinen, insbesondere Abrichthobelmaschinen, mit einer auf dem Maschinentisch stehenden Anschlagplatte und einer an dieser schwenkbar gelagerten Hilfsanschlagleiste, die aus einer auf dem Maschinentisch aufliegenden Betriebsstellung in eine Bereitschaftsstellung schwenkbar ist, dadurch gekennzeichnet, daß die Hilfsanschlagleiste (22) in ihrer Bereitschaftsstellung in einer den Abmessungen der Hilfsanschlagleiste (22) angepaßten Ausnehmung der Anschlagplatte (20) versenkt ist.

2. Anschlagvorrichtung nach Anspruch 1, dadurch gekennzeichnet, daß die Ausnehmung ein von der oberen Längskante (30) in die Anschlagplatte (20) eingearbeiteter Schlitz (32) ist.

3. Anschlagvorrichtung nach Anspruch 1 oder 2, dadurch gekennzeichnet, daß die Hilfsanschlagleiste (22) an ihrer freien, die Anschlagkante (56) bildenden Längsseite eine in der Betriebsstellung nach oben abstehende Griff- und Führungskante (58) aufweist.

4. Anschlagvorrichtung nach den Ansprüchen 2 und 3, dadurch gekennzeichnet, daß die den Schlitz (32) in der Anschlagplatte (20) zu deren Anschlagfläche (24) hin begrenzende Vorderwand (60) höher als deren Rückwand (26) ist, in deren Oberkante (62) eine Griffaussparung (64) eingearbeitet ist.

5. Anschlagvorrichtung nach einem der Ansprüche 2 bis 4, dadurch gekennzeichnet, daß jedes der beiden stirnseitigen Enden (34) der Hilfsanschlagleiste (22) über einen Schwenkarm (40) gelenkig mit einem höhenverschieblichen Gleitstein (46) verbunden ist, der in einer Längsführung (48) an der zugehörigen Stirnseite der Anschlagplatte (20) gelagert ist.

6. Anschlagvorrichtung nach Anspruch 5, dadurch gekennzeichnet, daß die Hilfsanschlagleiste (22) drehbar mit einem Schenkel (38) des i. w. L-förmigen Schwenkarms (40) verbunden ist, dessen anderer Schenkel (42) drehbar am Gleitstein (46) befestigt ist.

7. Anschlagvorrichtung nach Anspruch 6, dadurch gekennzeichnet, daß zwischen dem Gleitstein (46) und dem Schwenkarm (40) dessen Drehung zwischen der Betriebsstellung und der Bereitschaftsstellung auf etwa 180° begrenzende Anschlagmittel vorgesehen sind.

8. Anschlagvorrichtung nach Anspruch 7, dadurch gekennzeichnet, daß die Anschlagmittel einen von dem Gleitstein (46) abstehenden Stift (50) aufweisen, der in eine halbkreisförmige Führungsnut (52) im Schwenkarm (40) eingreift.

## Claims

1. Stop device for woodworking machines, particularly surface planing machines, comprising a stop plate on the machine table and an auxiliary stop ledge pivotally mounted on said stop plate and swingable from an operation position resting on the machine table into a ready position, characterized in that, in its ready position, said auxiliary stop ledge (22) is lowered into a recess provided in the stop plate (20) and fitted to the dimensions of the auxiliary stop ledge (22).

2. Stop device according to claim 1, wherein said recess is formed by a slot (32) extending from the upper longitudinal edge (30) of said stop plate into said stop plate (20).

3. Stop device according to claim 1 or 2, wherein the free longitudinal side of the auxiliary stop ledge (22) forming the stop edge of said stop ledge (22) is provided with a grip and guide edge (58) which, in the operating position, protrudes upwardly.

4. Stop device according to claims 2 and 3, wherein said stop plate (20) comprises a front wall (60) and a rear wall (26) spaced by said slot (32), wherein said front wall (60) having a stop surface (24) is higher than said rear wall (26) which comprises a grip recess (64) in the top (62) of said rear wall.

5. Stop device according to anyone of claims 2 to 4, wherein each of the two ends (34) of said auxiliary stop ledge (22) is pivotally connected via a swing arm (40) to a vertically displaceable slide block (46) mounted in a longitudinal guide (48) on the corresponding end (34) of said stop plate (20).

6. Stop device according to claim 5, wherein said auxiliary stop ledge (22) is pivotally attached to one arm (38) of the substantially L-shaped swing arm (40) while the other arm (42) thereof is pivotally connected to said slide block (46).

7. Stop device according to claim 6, comprising stop means between said slide block (46) and said swing arm (40); said stop means limiting the swing of said swing arm (40) to about 180° between said operating position and said ready position.

8. Stop device according to claim 7, wherein said stop means comprise a pin (50) which protrudes from said slide block (46) and engages in a semi-circular guide groove (52) in said swing arm (40).

## Revendications

1. Dispositif de butée pour des machines à travailler le bois, notamment des machines à dégauchir, comportant une plaque de butée placée sur la table de machine et une bande ou barrette de butée auxiliaire montée pivotante sur celle-ci, et susceptible de pivoter en une position d'attente, à partir d'une position de fonctionnement où elle repose sur la table de la machine, caractérisé en ce que, dans sa position d'attente, la bande ou barrette de butée auxiliaire (22) est toujours enfoncée dans un évidement de la bande de butée (20) adapté aux dimensions de la bande de butée auxiliaire (22).

2. Dispositif de butée selon la revendication 1, caractérisé en ce que l'évidement est une fente (32) usinée dans la plaque de butée (20), depuis l'arête longitudinale supérieure (30).

3. Dispositif de butée selon l'une quelconque des revendications 1 ou 2, caractérisé en ce que la bande de butée auxiliaire (22) présente sur son côté longitudinal libre, formant l'arête de butée (56) une arête de prise et de guidage (58) s'écartant vers le haut en position de fonctionnement.

4. Dispositif de butée selon les revendications 2 et 3, caractérisé en ce que la paroi avant (60) délimitant la fente (32) dans la plaque de butée (20), par rapport à sa surface de butée (24), est plus haute que la paroi arrière (26) dans l'arête supérieure (62) de laquelle est usiné un évidement de prise (64).

5. Dispositif de butée selon l'une des revendications 2 à 4, caractérisé en ce que chacune des deux extrémités frontales (34) de la bande de butée auxiliaire (22) est reliée de manière articulée par un bras pivotant (40) à un coulisseau (46) mobile en hauteur, monté dans un guidage longitudinal (48) sur la face frontale correspondante de la plaque de butée (20).

6. Dispositif de butée selon la revendication 5, caractérisé en ce que la bande de butée auxiliaire (22) peut être reliée pivotante à une branche (38) d'un bras pivotant (40), par exemple, en forme de L, dont l'autre branche (42) est fixée à rotation sur le coulisseau (46).

7. Dispositif de butée selon la revendication 6, caractérisé en ce que des moyens de butée sont prévus entre le coulisseau (46) et le bras pivotant (40), limitant à environ 180° sa rotation entre la position de fonctionnement et la position d'attente.

8. Dispositif de butée selon la revendication 7, caractérisé en ce que les moyens de butée comportent une tige (50) s'écartant du coulisseau (46) et qui s'engage dans une rainure de guidage (52) en forme de demi-cercle dans le bras pivotant (40).

Fig. 1

EP 0 229 834 B1

Fig. 2

Fig. 3

EP 0 229 834 B1

Fig. 4

Fig. 5

Fig. 6

Fig. 7

Fig. 8

EP 0 229 834 B1

Fig. 9          Fig. 10          Fig.11

EP 0 229 834 B1